# EUROPEAN PATENT SPECIFICATION

(11) **EP 2 408 298 B1**
(45) Date of publication and mention of the grant of the patent: **29.06.2016**
(21) Application number: 10707920.4
(22) Date of filing: 12.03.2010
(51) Int. Cl.: A01N 25/00, A01N 43/56, A01N 25/28, A01N 47/24

(54) **METHOD FOR TREATMENT OF CROP WITH AN ENCAPSULATED PESTICIDE**
VERFAHREN ZUR PFLANZENBEHANDLUNG MIT VERKAPSELTEM PESTIZID
PROCÉDÉ DE TRAITEMENT DE RÉCOLTE AVEC UN PESTICIDE ENCAPSULÉ

(30) Priority: 20.03.2009 US 161959 P; 28.04.2009 EP 09158960
(43) Date of publication of application: 25.01.2012
(73) Proprietor: BASF SE, 67056 Ludwigshafen am Rhein (DE)
(72) Inventor: BRAHM, Lutz, 67551 Worms (DE); GLADWIN, Robert John, Macclesfield SK10 2WD (GB); HABER, Josef, 67117 Limburgerhof (DE); SOWA, Christian, 67435 Neustadt (DE); FINCH, Charles W., Garner NC 27529 (US); VOLZ, Petra, 67433 Neustadt (DE); KOPLIN, Tobias Joachim, 67063 Ludwigshafen (DE)
(74) Representative: BASF IP Association
(86) International application number: PCT/EP2010/053148
(87) International publication number: WO 2010/105971

(56) References cited:
- EP-A- 0 252 897
- EP-A1- 0 270 742
- EP-A1- 0 369 614
- WO-A-2005/015999
- WO-A-2008/155097
- WO-A1-02/082901
- US-A- 5 925 595
- US-A1- 2006 128 569
- US-A1- 2007 238 615
- DATABASE WPI Week 200777 Thomson Scientific, London, GB; AN 2007-821479 XP002630882, & JP 2007 230997 A (SUMITOMO CHEM CO LTD) 13 September 2007 (2007-09-13)

## Description

The present invention is related to a method for the pesticidal treatment of crops which have a final growth height of at least 140 cm, comprising the treatment with an encapsulated pesticide at a growth height of the crop of up to 120 cm. The invention further relates to a composition comprising an encapsulated pesticide and a composition comprising a mixture of an encapsulated pesticide and a non-encapsulated, additional pesticide. Finally, the invention also relates to a use of an encapsulated pesticide for the pesticidal treatment of crop which has a final growth height of at least 140 cm at a growth height of the crop of less than 120 cm. Combinations of preferred embodiments with other preferred embodiments are within the scope of the present invention.

WO 2008/059053 discloses a method for increasing the dry biomass of a plant by treating a plant with a pesticide, e.g. pyraclostrobin. Suitable plant is corn. The plants are treated in the growing stage BBCH 30 to 70.

WO 2008/155097 discloses a method for improving the growth of a plant comprising applying to a plant microcapsules, which themselves comprise a polymeric shell and a core comprising a dispersed solid active ingredient. A suitable active ingredient are strobilurins and suitable plants are corn or sunflowers.

WO2008/021800 discloses a process for delaying or preventing the crystallization of a material having the tendency to crystallize in the aqueous phase, which comprises making certain capsules of said material. Suitable material are fungicides, such as pyraclostrobin. The capsules comprise urea formaldehyde prepolymers.

The technical information bulletin "Headline® Fungicide Corn" (published by BASF Corporation in 2008) discloses, that the Headline® fungicide (an emulsifiable concentrate of pyraclostrobin) may be applied to corn in the vegetative stages VE to V10 or in VT stage or later. As optimal application timing in corn VT through R2 stages or prior to the onset of disease is disclosed.

Pesticides are often commercially formulated as concentrates, emulsions or suspensions. Despite their various advantages, in some cases their use has some disadvantages: The optimal application timing for some pesticide is at a rather late growth stage, in which the plants are higher than 120 cm. For example, it recommended to apply emulsion concentrates of pyraclostrobin to corn at VT (corresponds to BBCH GS 55) through R2 (corresponds to BBCH GS 71) growth stage for the best yield response. This is only possible by rather expensive aerial application or special stilted tractors, because a ground application by usual tractors would result in damage to the crops after they have grown to a height of about 80 to 120 cm.

Object of the present invention was to develop a method for treating crops with pesticides, which avoids the problems associated with the state of the art. Such a method should be applicable by ground treatment with standard equipment at an earlier growth stage, whilst still delivering a yield benefit equivalent to the optimum timing which is at a later growth stage. Another object was to develop a pesticidal composition, which is usefull for said method.

The object was solved by a method for the pesticidal treatment of crops which have a final growth height of at least 140 cm, comprising the treatment with an encapsulated pesticide at a growth height of the crop of up to 120 cm.

The term "final growth height" refers to the average highest growth height of a certain crop. Typically, this growth height is reached at the time of harvest. This final growth height is well known in literature (Carter, Jack F. (Ed.), "Sunflower Science and Technology". Madison/Wisconsin: American Society of Agronomy, 1978. (Agronomy; volume 19); Cheers, Gordon. "Botanica: das Abc der Pflanzen: 10.000 Arten in Text und Bild". Cologne: Könemann 1998; Cramer, Nils. "Raps: Anbau und Verwertung". Stuttgart: Ulmer, 1990; Sprecher v. Bernegg, Andreas: "Tropische und subtropische Welt-wirtschaftspflanzen, ihre Geschichte, Kultur und volkswirtschaftliche Bedeutung. Teil 1 (XV): Stärke- und Zuckerpflanzen" 1929; Zscheischler, Johannes: "Handbuch Mais: Umweltgerechter Anbau, wirtschaftliche Verwertung". 4.Ed. Frankfurt/M.: DL.). The final growth height is usually determined in the absence of any growth regulators and refers to the growth height under average, natural conditions. In cases where the final growth height depends on local conditions, the final growth height refers to growth height in this local area.

Suitable crops which have a final growth height of at least 140 cm are well known. Typical examples are (final growth height in brackets) corn (200 - 300 cm), sunflower (up to 500 cm), oilseed rape (up to 200 cm), sugar cane (300 - 400 cm), sorghum (up to 500 cm) or miscanthus (up to 350 cm).Some crops species might be comprised of varieties, which have a final growth stage of less than 140 cm and of varieties, which have a final growth stage of at least 140 cm. According to the present invention only those varieties fall within the scope of the present invention, which have a final growth height of at least 140 cm.

Preferred crops are corn, sunflower, oilseed rape, sugar cane, sorghum or miscanthus. More preferred are corn, sunflower and oilseed rape, more preferably corn and sunflower, and most preferably corn. In another preferred embodiment, preferred crops are varieties of corn, sunflower, oilseed rape, sugar cane, sorghum or miscanthus, which have a final growth height of at least 140 cm, preferably of at least 160 cm.

The term "crops" is to be understood as including plants which have been modified by breeding, mutagenesis or genetic engineering including but not limiting to agricultural biotech products on the market or in development. **Genetically modified plants** are plants, which genetic material has been so modified by the use of recombinant DNA techniques that under natural circumstances cannot readily be obtained by cross breeding, mutations or natural recombination. Typically, one or more genes have been integrated into the genetic material of a genetically modified plant in order to improve certain properties of the plant. Such genetic modifications also include but are not limited to targeted post-transtional modification of protein(s), oligo- or polypeptides e. g. by glycosylation or polymer additions such as prenylated, acetylated or farnesylated moieties or PEG moieties.
Plants that have been modified by breeding, mutagenesis or genetic engineering, e. g. have been rendered tolerant to applications of specific classes of herbicides, such as hydroxyphenylpyruvate dioxygenase (HPPD) inhibitors; acetolactate synthase (ALS) inhibitors, such as sulfonyl ureas (see e. g. US 6,222,100, WO 01/82685, WO 00/26390, WO 97/41218, WO 98/02526, WO 98/02527, WO 04/106529, WO 05/20673, WO 03/14357, WO 03/13225, WO 03/14356, WO 04/16073) or imidazolinones (see e. g. US 6,222,100, WO 01/82685, WO 00/026390, WO 97/41218, WO 98/002526, WO 98/02527, WO 04/106529, WO 05/20673, WO 03/014357, WO 03/13225, WO 03/14356, WO 04/16073); enolpyruvylshikimate-3-phosphate synthase (EPSPS) inhibitors, such as glyphosate (see e. g. WO 92/00377); glutamine synthetase (GS) inhibitors, such as glufosinate (see e.g. EP-A 242 236, EP-A 242 246) or oxynil herbicides (see e. g. US 5,559,024) as a result of conventional methods of breeding or genetic engineering. Several cultivated plants have been rendered tolerant to herbicides by conventional methods of breeding (mutagenesis), e. g. Clearfield^{®} summer rape (Canola, BASF SE, Germany) being tolerant to imidazolinones, e. g. imazamox. Genetic engineering methods have been used to render cultivated plants such as soybean, cotton, corn, beets and rape, tolerant to herbicides such as glyphosate and glufosinate, some of which are commercially available under the trade names RoundupReady^{®} (glyphosate-tolerant, Monsanto, U.S.A.) and LibertyLink^{®} (glufosinate-tolerant, Bayer CropScience, Germany).
Furthermore, plants are also covered that are by the use of recombinant DNA techniques capable to synthesize one or more insecticidal proteins, especially those known from the bacterial genus *Bacillus,* particularly from *Bacillus thuringiensis,* such as δ-endotoxins, e. g. CryIA(b), CryIA(c), CryIF, CryIF(a2), CryIIA(b), CryIIIA, CryIIIB(b1) or Cry9c; vegetative insecticidal proteins (VIP), e. g. VIP1, VIP2, VIP3 or VIP3A; insecticidal proteins of bacteria colonizing nematodes, e. g. *Photorhabdus* spp. or *Xenorhab-dus* spp.; toxins produced by animals, such as scorpion toxins, arachnid toxins, wasp toxins, or other insect-specific neurotoxins; toxins produced by fungi, such Streptomycetes toxins, plant lectins, such as pea or barley lectins; agglutinins; proteinase inhibitors, such as trypsin inhibitors, serine protease inhibitors, patatin, cystatin or papain inhibitors; ribosome-inactivating proteins (RIP), such as ricin, maize-RIP, abrin, luffin, saporin or bryodin; steroid metabolism enzymes, such as 3-hydroxysteroid oxidase, ecdysteroid-IDP-glycosyl-transferase, cholesterol oxidases, ecdysone inhibitors or HMG-CoA-reductase; ion channel blockers, such as blockers of sodium or calcium channels; juvenile hormone esterase; diuretic hormone receptors (helicokinin receptors); stilben synthase, bibenzyl synthase, chitinases or glucanases. In the context of the present invention these insecticidal proteins or toxins are to be understood expressly also as pre-toxins, hybrid proteins, truncated or otherwise modified proteins. Hybrid proteins are characterized by a new combination of protein domains, (see, e. g. WO 02/015701). Further examples of such toxins or genetically modified plants capable of synthesizing such toxins are disclosed, e. g., in EP-A 374 753, WO 93/007278, WO 95/34656, EP-A 427 529, EP-A 451 878, WO 03/18810 und WO 03/52073. The methods for producing such genetically modified plants are generally known to the person skilled in the art and are described, e. g. in the publications mentioned above. These insecticidal proteins contained in the genetically modified plants impart to the plants producing these proteins tolerance to harmful pests from all taxonomic groups of athropods, especially to beetles (Coeloptera), two-winged insects (Diptera), and moths (Lepidoptera) and to nematodes (Nematoda). Genetically modified plants capable to synthesize one or more insecticidal proteins are, e. g., described in the publications mentioned above, and some of which are commercially available such as YieldGard^{®} (corn cultivars producing the Cry1Ab toxin), YieldGard^{®} Plus (corn cultivars producing Cry1Ab and Cry3Bb1 toxins), Starlink^{®} (corn cultivars producing the Cry9c toxin), Herculex^{®} RW (corn cultivars producing Cry34Ab1, Cry35Ab1 and the enzyme Phosphinothricin-N-Acetyltransferase [PAT]); NuCOTN^{®} 33B (cotton cultivars producing the Cry1Ac toxin), Bollgard^{®} I (cotton cultivars producing the Cry1Ac toxin), Bollgard^{®} II (cotton cultivars producing Cry1Ac and Cry2Ab2 toxins); VIPCOT^{®} (cotton cultivars producing a VIP-toxin); NewLeaf^{®} (potato cultivars producing the Cry3A toxin); Bt-Xtra^{®}, NatureGard^{®}, KnockOut^{®}, BiteGard^{®}, Protecta^{®}, Bt11 (e. g. Agrisure^{®} CB) and Bt176 from Syngenta Seeds SAS, France, (corn cultivars producing the Cry1Ab toxin and PAT enyzme), MIR604 from Syngenta Seeds SAS, France (corn cultivars producing a modified version of the Cry3A toxin, c.f. WO 03/018810), MON 863 from Monsanto Europe S.A., Belgium (corn cultivars producing the Cry3Bb1 toxin), IPC 531 from Monsanto Europe S.A., Belgium (cotton cultivars producing a modified version of the Cry1Ac toxin) and 1507 from Pioneer Overseas Corporation, Belgium (corn cultivars producing the Cry1F toxin and PAT enzyme).
Furthermore, plants are also covered that are by the use of recombinant DNA techniques capable to synthesize one or more proteins to increase the resistance or tolerance of those plants to bacterial, viral or fungal pathogens. Examples of such proteins are the so-called "pathogenesis-related proteins" (PR proteins, see, e. g.
EP-A 392 225), plant disease resistance genes (e. g. potato cultivars, which express resistance genes acting against *Phytophthora infestans* derived from the mexican wild potato *Solanum bulbocastanum*) or T4-lysozym (e. g. potato cultivars capable of synthesizing these proteins with increased resistance against bacteria such as *Erwinia amylvora*). The methods for producing such genetically modified plants are generally known to the person skilled in the art and are described, e. g. in the publications mentioned above.
Furthermore, plants are also covered that are by the use of recombinant DNA techniques capable to synthesize one or more proteins to increase the productivity (e. g. bio mass production, grain yield, starch content, oil content or protein content), tolerance to drought, salinity or other growth-limiting environmental factors or tolerance to pests and fungal, bacterial or viral pathogens of those plants.
Furthermore, plants are also covered that contain by the use of recombinant DNA techniques a modified amount of substances of content or new substances of content, specifically to improve human or animal nutrition, e. g. oil crops that produce health-promoting long-chain omega-3 fatty acids or unsaturated omega-9 fatty acids (e. g. Nexera^{®} rape, DOW Agro Sciences, Canada).
Furthermore, plants are also covered that contain by the use of recombinant DNA techniques a modified amount of substances of content or new substances of content, specifically to improve raw material production, e. g. potatoes that produce increased amounts of amylopectin (e. g. Amflora^{®} potato, BASF SE, Germany).

Usually, the treatment with an encapsulated pesticide is done at a **growth height** of the crop of less than 120 cm, preferably less than 115 cm, more preferably, less than 110 cm, even more preferably, less than 100 cm. Typically, the treatment with an encapsulated pesticide is done at a growth height of the crop of higher than 10 cm, preferably higher than 30 cm, and more preferably higher than 50 cm. The farmer can easily determine the growth height of the crop by measuring the growth height from the ground to the top of the crop by a measuring tape. Typically, at least 70 %, preferably at least 80 % and more preferably at least 90 % of the crop plants on a field, which has to be treated, will show the aforementioned growth height.

The term **"growth stage"** refers to the growth stages as defined by the **BBCH Codes** in "Growth stages of mono-and dicotyledonous plants", 2nd edition 2001, edited by Uwe Meier from the Federal Biological Research Centre for Agriculture and Forestry. The BBCH codes are a well established system for a uniform coding of phonologically similar growth stages of all mono- and dicotyledonous plant species. In some countries related codes are known for specific crops. Such codes may be correlated to the BBCH code as exemplified by Harell et al., Agronomy J.. 1998, 90, 235-238. Corn is often classified in vegetative stages [VE (emergence), V1 (first leaf), V2 (second leaf), V3 (third leaf), V(n) (nth leaf), VT (tasseling)] and reproductive stages [R1 (silking), R2 (blister), R3 (milk), R4 (dough), R5 (dent), R6 (physiological maturity)].

In a preferred embodiment the crop is corn, which is treated at its growth stage BBCH 10 to 51; sunflower, which is treated at its growth stage BBCH 10 to BBCH 69; oilseed rape, which is treated at its growth stage BBCH 10 to 69; sorghum, which is treated at its growth stage BBCH 10 to 51; or sugar cane, which is treated at its growth stage BBCH 11 to 49.

More preferred, crop is corn, which is treated at its growth stage BBCH 13 to 39; sunflower, which is treated at its growth stage BBCH 13 to BBCH 57; oilseed rape, which is treated at its growth stage BBCH 13 to 59; sorghum, which is treated at its growth stage BBCH 13 to 39; or sugar cane, which is treated at its growth stage BBCH 29 to 49.

Even more preferred, crop is corn, which is treated at its growth stage BBCH 30 to 39; sunflower, which is treated at its growth stage BBCH 37 to BBCH 55; oilseed rape, which is treated at its growth stage BBCH 30 to 59; sorghum, which is treated at its growth stage BBCH 30 to 39; or sugar cane, which is treated at its growth stage BBCH 31 to 39.

In an preferred embodiment **corn** is usually treated at its growth stage BBCH 10 (First leaf through coleoptile) to 51 (Beginning of tassle emergence), preferably 13 (Third leaf unfolded) to 39 (9 or more nodes detectable), especially 30 (Beginning of stem elongation) to 39 (9 or more nodes detectable), and most preferably 32 (2 nodes detectable) to 39 (9 or more nodes detectable). In another preferred embodiment, corn is treated at a growth height of up to 120 cm, preferably up to 115 cm, more preferably up to 100 cm.

In an another preferred embodiment **sunflower** is usually treated at its growth stage BBCH 10 (Cotyledons completely unfolded) to 69 (End of flowering), preferably 13 (Third leaf unfolded) to 59 (Ray florets visible between the bracts), more preferably 37 (7 visibly extended internodes) to 55 (Inflorescence separated from youngest foliage leaf) and especially at 39 (9 or more visibly extended internodes) to 53 (Inflorescence separating from youngest leaves, bracts distinguishable from foliage leaves). In another preferred embodiment, sunflower is treated at a growth stage at a crop height of up to 120 cm, preferably up to 100 cm, more preferably up to 80 cm.

In another preferred embodiment **oilseed rape** is usually treated at its growth stage BBCH 10 (Cotyledon completely unfolded) to 69 (End of flowering), preferably 13 (Third leaf unfolded) to 59 (First petals visible), more preferably 30 (Start of stem extension) to 59 (first petals visible) and especially at 50 (flower buds present) to 59 (first petals visible). In another preferred embodiment, oilseed rape is treated at a growth stage at a crop height of up to 120 cm, preferably up to 100 cm, more preferably up to 80 cm.

In an another preferred embodiment **sugar cane** is usually treated at its growth stage BBCH 11 (first leaf unfolded) to 49 (harvestable vegetative plant parts have reached final size), preferably 29 (end of tillering) to 49 (harvestable vegetative plant parts have reached final size), more preferably 31 (beginning of shooting, 1 node detectable) to 39 (end of shooting, stem reached final length) and especially at 31 (beginning of shooting, 1 node detectable) to 37 (shooting, 7 nodes detectable). In another preferred embodiment, sugar cane is treated at a growth stage at a height of up to 120 cm, preferably up to 100cm, more preferably up to 80 cm.

In an another preferred embodiment **sorghum** is usually treated at its growth stage BBCH 10 (First leaf through coleoptile) to 51 (Beginning of tassle emergence), preferably 13 (Third leaf unfolded) to 39 (9 or more nodes detectable), especially 30 (Beginning of stem elongation) to 39 (9 or more nodes detectable), and most preferably 35 (5 nodes detectable) to 39 (9 or more nodes detectable). In another preferred embodiment, sorghum is treated at a growth stage at a crop height of up to 120 cm, preferably up to 100 cm, more preferably up to 80 cm.

The term **"pesticide"** refers to at least one pesticide selected from the group of fungicides, insecticides, nematicides, herbicides, safeners and or growth regulators. Also mixtures of pesticides from two or more of the aforementioned classes may be used. An expert is familiar with such pesticides, which might be found in the Pesticide Manual, 14th Ed. (2006), The British Crop Protection Council, London.

### Suitable fungicides are

A) strobilurins
   azoxystrobin, dimoxystrobin, enestroburin, fluoxastrobin, kresoxim-methyl, metominostrobin, orysastrobin, picoxystrobin, pyraclostrobin, pyribencarb, trifloxystrobin, 2-(2-(6-(3-chloro-2-methyl-phenoxy)-5-fluoro-pyrimidin-4-yloxy)-phenyl)-2-methoxy-imino-N-methyl-acetamide, 3-methoxy-2-(2-(N-(4-methoxy-phenyl)-cyclopropane-carboximidoylsulfanylmethyl)-phenyl)-acrylic acid methyl ester, methyl (2-chloro-5-[1-(3-methylbenzyloxyimino)ethyl]benzyl)carbamate and 2-(2-(3-(2,6-di-chlorophenyl)-1-methyl-allylideneaminooxymethyl)-phenyl)-2-methoxyimino-N-methyl-acetamide;
B) carboxamides
   - carboxanilides: benalaxyl, benalaxyl-M, benodanil, bixafen, boscalid, carboxin, fenfuram, fenhexamid, flutolanil, fluxapyroxad, furametpyr, isopyrazam, isotianil, kiral-axyl, mepronil, metalaxyl, metalaxyl-M (mefenoxam), ofurace, oxadixyl, oxycarboxin, penflufen, penthiopyrad, sedaxane, tecloftalam, thifluzamide, tiadinil, 2-amino-4-methyl-thiazole-5-carboxanilide, 2-chloro-N-(1,1,3-trimethyl-indan-4-yl)-nicotinamide, N-(2',4'-difluorobiphenyl-2-yl)-3-difluoromethyl-1-methyl-1H-pyrazole-4-carboxamide, N-(2',4'-dichlorobiphenyl-2-yl)-3-difluoromethyl-1-methyl-1 H-pyrazole-4-carboxamide, N-(2',5'-difluorobiphenyl-2-yl)-3-difluoromethyl-1-methyl-1 H-pyrazole-4-carboxamide, N-(2',5'-dichlorobiphenyl-2-yl)-3-difluoromethyl-1-methyl-1 H-pyrazole-4-carboxamide, N-(3',5'-difluorobiphenyl-2-yl)-3-difluoromethyl-1-methyl-1 H-pyrazole-4-carboxamide, N-(3'-fluorobiphenyl-2-yl)-3-difluoromethyl-1-methyl-1H-pyrazole-4-carboxamide, N-(3'-chlorobiphenyl-2-yl)-3-difluoromethyl-1-methyl-1H-pyrazole-4-carboxamide, N-(2'-fluorobiphenyl-2-yl)-3-difluoromethyl-1-methyl-1H-pyrazole-4-carboxamide, N-(2'-chlorobiphenyl-2-yl)-3-di-fluoromethyl-1-methyl-1 H-pyrazole-4-carboxamide, N-(3',5'-dichlorobiphenyl-2-yl)-3-difluoromethyl-1-methyl-1H-pyrazole-4-carboxamide, N-(3',4',5'-trifluorobiphenyl-2-yl)-3-difluoromethyl-1-methyl-1 H-pyrazole-4-carboxamide (corresponding to a 1-methylpyrazol-4-ylcarboxanilides of the formula I below; also known as fluxapyroxad), N-(2',4',5'-trifluorobiphenyl-2-yl)-3-difluoromethyl-1-methyl-1H-pyrazole-4-carboxamide, N-[2-(1,1,2,3,3,3-hexafluoropropoxy)-phenyl]-3-difluoromethyl-1-methyl-1 H-pyrazole-4-carboxamide, N-[2-(1,1,2,2-tetrafluoroethoxy)-phenyl]-3-difluoromethyl-1-methyl-1H-pyrazole-4-carboxamide, N-(4'-trifluoromethylthiobiphenyl-2-yl)-3-difluoromethyl-1-methyl-1 H-pyrazole-4-carboxamide, N-(2-(1,3-dimethyl-butyl)-phenyl)-1,3-dimethyl-5-fluoro-1H-pyrazole-4-carboxamide, N-(2-(1,3,3-trimethyl-butyl)-phenyl)-1,3-dimethyl-5-fluoro-1H-pyrazole-4-carboxamide, N-(4'-chloro-3',5'-difluoro-biphenyl-2-yl)-3-difluoromethyl-1-methyl-1H-pyrazole-4-carboxamide, N-(4'-chloro-3',5'-difluoro-biphenyl-2-yl)-3-trifluoromethyl-1-methyl-1 H-pyrazole-4-carboxamide, N-(3',4'-dichloro-5'-fluoro-biphenyl-2-yl)-3-trifluoromethyl-1-methyl-1H-pyrazole-4-carboxamide, N-(3',5'-difluoro-4'-methyl-biphenyl-2-yl)-3-difluoromethyl-1-methyl-1H-pyrazole-4-carboxamide, N-(3',5'-di-fluoro-4'-methyl-biphenyl-2-yl)-3-trifluoromethyl-1-methyl-1 H-pyrazole-4-carboxamide, N-[1,2,3,4-tetrahydro-9-(1-methylethyl)-1,4-methanonaphthalen-5-yl]-3-(difluoromethyl)-1-methyl-1H-pyrazole-4-carboxamide, 1-methylpyrazol-4-ylcarboxanilides of the formula I 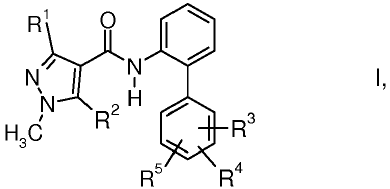 in which the substituents are as defined below:
      R¹ is C₁-C₄-alkyl or C₁-C₄-haloalkyl;
      R² is hydrogen;
      R³, R⁴ and R⁵ independently of one another are cyano, nitro, halogen, C₁-C₄-alkyl, C₁-C₄-haloalkyl, C₁-C₄-alkoxy, C₁-C₄-haloalkoxy or C₁-C₄-alkylthio;
   - carboxylic morpholides: dimethomorph, flumorph, pyrimorph;
   - benzoic acid amides: flumetover, fluopicolide, fluopyram, zoxamide, N-(3-Ethyl-3,5,5-trimethyl-cyclohexyl)-3-formylamino-2-hydroxy-benzamide;
   - other carboxamides: carpropamid, dicyclomet, mandiproamid, oxytetracyclin, silthi-ofarm and N-(6-methoxy-pyridin-3-yl) cyclopropanecarboxylic acid amide;
C) azoles
   - triazoles: azaconazole, bitertanol, bromuconazole, cyproconazole, difenoconazole, diniconazole, diniconazole-M, epoxiconazole, fenbuconazole, fluquinconazole, flusilazole, flutriafol, hexaconazole, imibenconazole, ipconazole, metconazole, myclobutanil, oxpoconazole, paclobutrazole, penconazole, propiconazole, prothioconazole, simeconazole, tebuconazole, tetraconazole, triadimefon, triadimenol, triticonazole, uniconazole, 1-(4-chloro-phenyl)-2-([1,2,4]triazol-1-yl)-cycloheptanol;
   - imidazoles: cyazofamid, imazalil, pefurazoate, prochloraz, triflumizol;
   - benzimidazoles: benomyl, carbendazim, fuberidazole, thiabendazole;
   - others: ethaboxam, etridiazole, hymexazole and 2-(4-chloro-phenyl)-N-[4-(3,4-di-methoxy-phenyl)-isoxazol-5-yl]-2-prop-2-ynyloxy-acetamide;
D) heterocyclic compounds
   - pyridines: fluazinam, pyrifenox, 3-[5-(4-chloro-phenyl)-2,3-dimethyl-isoxazolidin-3-yl]-pyridine, 3-[5-(4-methyl-phenyl)-2,3-dimethyl-isoxazolidin-3-yl]-pyridine, 2,3,5,6-tetra-chloro-4-methanesulfonyl-pyridine, 3,4,5-trichloropyridine-2,6-di-carbo-nitrile, N-(1-(5-bromo-3-chloro-pyridin-2-yl)-ethyl)-2,4-dichloronicotinamide, N-[(5-bromo-3-chloro-pyridin-2-yl)-methyl]-2,4-dichloro-nicotinamide;
   - pyrimidines: bupirimate, cyprodinil, diflumetorim, fenarimol, ferimzone, mepanipyrim, nitrapyrin, nuarimol, pyrimethanil;
   - piperazines: triforine;
   - pyrroles: fenpiclonil, fludioxonil;
   - morpholines: aldimorph, dodemorph, dodemorph-acetate, fenpropimorph, tridemorph;
   - piperidines: fenpropidin;
   - dicarboximides: fluoroimid, iprodione, procymidone, vinclozolin;
   - non-aromatic 5-membered heterocycles: famoxadone, fenamidone, flutianil, octhilinone, probenazole, 5-amino-2-isopropyl-3-oxo-4-ortho-tolyl-2,3-dihydro-pyrazole-1-carbothioic acid S-allyl ester;
   - others: acibenzolar-S-methyl, amisulbrom, anilazin, blasticidin-S, captafol, captan, chinomethionat, dazomet, debacarb, diclomezine, difenzoquat, difenzoquat-methylsulfate, fenoxanil, Folpet, oxolinic acid, piperalin, proquinazid, pyroquilon, quinoxyfen, triazoxide, tricyclazole, 2-butoxy-6-iodo-3-propylchromen-4-one, 5-chloro-1-(4,6-dimethoxy-pyrimidin-2-yl)-2-methyl-1H-benzoimidazole, 5-chloro-7-(4-methyl-piperidin-1-yl)-6-(2,4,6-trifluorophenyl)-[1,2,4]triazolo[1,5-a]pyrimidine, 6-(3,4-di-chloro-phenyl)-5-methyl-[1,2,4]triazolo[1,5-a]pyrimidine-7-ylamine, 6-(4-tert-butyl-phenyl)-5-methyl-[1,2,4]triazolo[1,5-a]pyrimidine-7-ylamine, 5-methyl-6-(3,5,5-tri-methyl-hexyl)-[1,2,4]triazolo[1,5-a]pyrimidine-7-ylamine, 5-methyl-6-octyl-[1,2,4]tri-azolo[1,5-a]pyrimidine-7-ylamine, 6-methyl-5-octyl-[1,2,4]triazolo[1,5-a]pyrimidine-7-ylamine, 6-ethyl-5-octyl-[1,2,4]triazolo[1,5-a]pyrimidine-7-ylamine, 5-ethyl-6-octyl-[1,2,4]triazolo[1,5-a]pyrimidine-7-ylamine, 5-ethyl-6-(3,5,5-trimethyl-hexyl)-[1,2,4]tri-azolo[1,5-a]pyrimidine-7-ylamine, 6-octyl-5-propyl-[1,2,4]triazolo[1,5-a]pyrimidine-7-ylamine, 5-methoxymethyl-6-octyl-[1,2,4]triazolo[1,5-a]pyrimidine-7-ylamine, 6-octyl-5-trifluoromethyl-[1,2,4]triazolo[1,5-a]pyrimidine-7-ylamine and 5-trifluoromethyl-6-(3,5,5-trimethyl-hexyl)-[1,2,4]triazolo[1,5-a]pyrimidine-7-ylamine;
E) carbamates
   - thio- and dithiocarbamates: ferbam, mancozeb, maneb, metam, methasulphocarb, metiram, propineb, thiram, zineb, ziram;
   - carbamates: benthiavalicarb, diethofencarb, iprovalicarb, propamocarb, propamocarb hydrochlorid, valiphenal and N-(1-(1-(4-cyano-phenyl)ethanesulfonyl)-but-2-yl) carbamic acid-(4-fluorophenyl) ester;
F) other active substances
   - guanidines: guanidine, dodine, dodine free base, guazatine, guazatine-acetate, iminoctadine, iminoctadine-triacetate, iminoctadine-tris(albesilate);
   - antibiotics: kasugamycin, kasugamycin hydrochloride-hydrate, streptomycin, poly-oxine, validamycin A;
   - nitrophenyl derivates: binapacryl, dinobuton, dinocap, nitrthal-isopropyl, tecnazen, organometal compounds: fentin salts, such as fentin-acetate, fentin chloride or fentin hydroxide;
   - sulfur-containing heterocyclyl compounds: dithianon, isoprothiolane;
   - organophosphorus compounds: edifenphos, fosetyl, fosetyl-aluminum, iprobenfos, phosphorous acid and its salts, pyrazophos, tolclofos-methyl;
   - organochlorine compounds: chlorothalonil, dichlofluanid, dichlorophen, flusulfamide, hexachlorobenzene, pencycuron, pentachlorphenole and its salts, phthalide, quintozene, thiophanate-methyl, tolylfluanid, N-(4-chloro-2-nitro-phenyl)-N-ethyl-4-methyl-benzenesulfonamide;
   - inorganic active substances: Bordeaux mixture, copper acetate, copper hydroxide, copper oxychloride, basic copper sulfate, sulfur;
   - others: biphenyl, bronopol, cyflufenamid, cymoxanil, diphenylamin, metrafenone, mildiomycin, oxin-copper, prohexadione-calcium, spiroxamine, tolylfluanid, N-(cyclo-propylmethoxyimino-(6-difluoro-methoxy-2,3-difluoro-phenyl)-methyl)-2-phenyl acetamide, N'-(4-(4-chloro-3-trifluoromethyl-phenoxy)-2,5-dimethyl-phenyl)-N-ethyl-N-methyl formamidine, N'-(4-(4-fluoro-3-trifluoromethyl-phenoxy)-2,5-dimethyl-phenyl)-N-ethyl-N-methyl formamidine, N'-(2-methyl-5-trifluoromethyl-4-(3-trimethyl-silanyl-propoxy)-phenyl)-N-ethyl-N-methyl formamidine, N'-(5-difluoromethyl-2-methyl-4-(3-trimethylsilanyl-propoxy)-phenyl)-N-ethyl-N-methyl formamidine, 2-{1-[2-(5-methyl-3-trifluoromethyl-pyrazole-1-yl)-acetyl]-piperidin-4-yl}-thiazole-4-carboxylic acid methyl-(1,2,3,4-tetrahydro-naphthalen-1-yl)-amide, 2-{1-[2-(5-methyl-3-trifluoromethyl-pyrazole-1-yl)-acetyl]-piperidin-4-yl}-thiazole-4-carboxylic acid methyl-(R)-1,2,3,4-tetrahydro-naphthalen-1-yl-amide, acetic acid 6-tert.-butyl-8-fluoro-2,3-dimethyl-quinolin-4-yl ester and methoxy-acetic acid 6-tert-butyl-8-fluoro-2,3-dimethyl-quinolin-4-yl ester.

Suitable growth regulators are:
- abscisic acid, amidochlor, ancymidol, 6-benzylaminopurine, brassinolide, butralin, chlormequat (chlormequat chloride), choline chloride, cyclanilide, daminozide, dikegulac, dimethipin, 2,6-dimethylpuridine, ethephon, flumetralin, flurprimidol, fluthiacet, forchlorfenuron, gibberellic acid, inabenfide, indole-3-acetic acid , maleic hydrazide, mefluidide, mepiquat (e.g. mepiquat chloride, or mepiquat pentaborate), naphthaleneacetic acid, N-6-benzyladenine, paclobutrazol, prohexadione (prohexadione-calcium), prohydrojasmon, thidiazuron, triapenthenol, tributyl phosphorotrithioate, 2,3,5-tri-iodobenzoic acid , trinexapac-ethyl and uniconazole.
- Ethylene modulators:
   Ethylene biosynthesis inhibitors which inhibit the conversion of S-adenosyl-L-methionine into 1-aminocyclopropane-1-carboxylic acid (ACC), such as derivatives of vinylglycine, hydroxylamines, oxime ether derivatives;
   Ethylene biosynthesis inhibitors which block the conversion of ACC into ethylene, selected from the group consisting of: Co⁺⁺ or Ni⁺⁺ ions in plant-available forms;
   phenolic radical scavengers such as n-propyl gallate; polyamines, such as putrescine, spermine or spermidine; structural analogs of ACC, such as α-aminoisobutyric acid or L-aminocyclopropene-1-carboxylic acid; salicylic acid or acibenzolar-S-methyl; structural analogs of ascorbic acid which act as inhibitors of ACC oxidase, such as prohexadione-Ca or trinexapac-ethyl;
   Inhibitors of the action of ethylene selected from the group consisting of : structural analogs of ethylene such as cyclopropene and its derivatives (i.e. US Pat. No 5518988, 6194350), aviglycine, aviglycine hydrochloride, 2,5-norbornadiene, and 3-amino-1,2,4-triazole or Ag²⁺ ions, especially 1-methylcyclopropene.

Suitable herbicides are:
- acetamides: acetochlor, alachlor, butachlor, dimethachlor, dimethenamid, flufenacet, mefenacet, metolachlor, metazachlor, napropamide, naproanilide, pethoxamid, pretilachlor, propachlor, thenylchlor;
- amino acid derivatives: bilanafos, glyphosate, glufosinate, sulfosate;
- aryloxyphenoxypropionates: clodinafop, cyhalofop-butyl, fenoxaprop, fluazifop, haloxyfop, metamifop, propaquizafop, quizalofop, quizalofop-P-tefuryl;
- Bipyridyls: diquat, paraquat;
- (thio)carbamates: asulam, butylate, carbetamide, desmedipham, dimepiperate, eptam (EPTC), esprocarb, molinate, orbencarb, phenmedipham, prosulfocarb, pyributicarb, thiobencarb, triallate;
- cyclohexanediones: butroxydim, clethodim, cycloxydim, profoxydim, sethoxydim, tepraloxydim, tralkoxydim;
- dinitroanilines: benfluralin, ethalfluralin, oryzalin, pendimethalin, prodiamine, trifluralin;
- diphenyl ethers: acifluorfen, aclonifen, bifenox, diclofop, ethoxyfen, fomesafen, lactofen, oxyfluorfen;
- hydroxybenzonitriles: bomoxynil, dichlobenil, ioxynil;
- imidazolinones: imazamethabenz, imazamox, imazapic, imazapyr, imazaquin, imazethapyr;
- phenoxy acetic acids: clomeprop, 2,4-dichlorophenoxyacetic acid (2,4-D), 2,4-DB, dichlorprop, MCPA, MCPA-thioethyl, MCPB, Mecoprop;
- pyrazines: chloridazon, flufenpyr-ethyl, fluthiacet, norflurazon, pyridate;
- pyridines: aminopyralid, clopyralid, diflufenican, dithiopyr, fluridone, fluroxypyr, picloram, picolinafen, thiazopyr;
- sulfonyl ureas: amidosulfuron, azimsulfuron, bensulfuron, chlorimuron-ethyl, chlorsulfuron, cinosulfuron, cyclosulfamuron, ethoxysulfuron, flazasulfuron, flucetosulfuron, flupyrsulfuron, foramsulfuron, halosulfuron, imazosulfuron, iodosulfuron, mesosulfuron, metsulfuron-methyl, nicosulfuron, oxasulfuron, primisulfuron, prosulfuron, pyrazosulfuron, rimsulfuron, sulfometuron, sulfosulfuron, thifensulfuron, triasulfuron, tribenuron, trifloxysulfuron, triflusulfuron, tritosulfuron, 1-((2-chloro-6-propyl-imidazo[1,2-b]pyridazin-3-yl)sulfonyl)-3-(4,6-dimethoxy-pyrimidin-2-yl)urea;
- triazines: ametryn, atrazine, cyanazine, dimethametryn, ethiozin, hexazinone, metamitron, metribuzin, prometryn, simazine, terbuthylazine, terbutryn, triaziflam;
- ureas: chlorotoluron, daimuron, diuron, fluometuron, isoproturon, linuron, methabenzthiazuron,tebuthiuron;
- other acetolactate synthase inhibitors: bispyribac-sodium, cloransulam-methyl, diclosulam, florasulam, flucarbazone, flumetsulam, metosulam, ortho-sulfamuron, penoxsulam, propoxycarbazone, pyribambenz-propyl, pyribenzoxim, pyriftalid, pyriminobac-methyl, pyrimisulfan, pyrithiobac, pyroxasulfone, pyroxsulam;
- others: amicarbazone, aminotriazole, anilofos, beflubutamid, benazolin, bencarbazone,benfluresate, benzofenap, bentazone, benzobicyclon, bromacil, bromobutide, butafenacil, butamifos, cafenstrole, carfentrazone, cinidon-ethlyl, chlorthal, cinmethylin, clomazone, cumyluron, cyprosulfamide, dicamba, difenzoquat, diflufenzopyr, *Drechslera monoceras,* endothal, ethofumesate, etobenzanid, fentrazamide, flumiclorac-pentyl, flumioxazin, flupoxam, flurochloridone, flurtamone, indanofan, isoxaben, isoxaflutole, lenacil, propanil, propyzamide, quinclorac, quinmerac, mesotrione, methyl arsonic acid, naptalam, oxadiargyl, oxadiazon, oxaziclomefone, pentoxazone, pinoxaden, pyraclonil, pyraflufen-ethyl, pyrasulfotole, pyrazoxyfen, pyrazolynate, quinoclamine, saflufenacil, sulcotrione, sulfentrazone, terbacil, tefuryltrione, tembotrione, thiencarbazone, topramezone, 4-hydroxy-3-[2-(2-methoxy-ethoxymethyl)-6-trifluoromethyl-pyridine-3-carbonyl]-bicyclo[3.2.1]oct-3-en-2-one, (3-[2-chloro-4-fluoro-5-(3-methyl-2,6-dioxo-4-trifluoromethyl-3,6-dihydro-2H-pyrimidin-1-yl)-phenoxy]-pyridin-2-yloxy)-acetic acid ethyl ester, 6-amino-5-chloro-2-cyclopropyl-pyrimidine-4-carboxylic acid methyl ester, 6-chloro-3-(2-cyclopropyl-6-methyl-phenoxy)-pyridazin-4-ol, 4-amino-3-chloro-6-(4-chloro-phenyl)-5-fluoro-pyridine-2-carboxylic acid, 4-amino-3-chloro-6-(4-chloro-2-fluoro-3-methoxy-phenyl)-pyridine-2-carboxylic acid methyl ester, and 4-amino-3-chloro-6-(4-chloro-3-dimethylamino-2-fluoro-phenyl)-pyridine-2-carboxylic acid methyl ester.

Suitable insecticides are:
- organo(thio)phosphates: acephate, azamethiphos, azinphos-methyl, chlorpyrifos, chlorpyrifos-methyl, chlorfenvinphos, diazinon, dichlorvos, dicrotophos, dimethoate, disulfoton, ethion, fenitrothion, fenthion, isoxathion, malathion, methamidophos, methidathion, methyl-parathion, mevinphos, monocrotophos, oxydemeton-methyl, paraoxon, parathion, phenthoate, phosalone, phosmet, phosphamidon, phorate, phoxim, pirimiphos-methyl, profenofos, prothiofos, sulprophos, tetrachlorvinphos, terbufos, triazophos, trichlorfon;
- carbamates: alanycarb, aldicarb, bendiocarb, benfuracarb, carbaryl, carbofuran, carbosulfan, fenoxycarb, furathiocarb, methiocarb, methomyl, oxamyl, pirimicarb, propoxur, thiodicarb, triazamate;
- pyrethroids: allethrin, bifenthrin, cyfluthrin, cyhalothrin, cyphenothrin, cypermethrin, alpha-cypermethrin, beta-cypermethrin, zeta-cypermethrin, deltamethrin, esfenvalerate, etofenprox, fenpropathrin, fenvalerate, imiprothrin, lambda-cyhalothrin, permethrin, prallethrin, pyrethrin I and II, resmethrin, silafluofen, tau-fluvalinate, tefluthrin, tetramethrin, tralomethrin, transfluthrin, profluthrin, dimefluthrin;
- insect growth regulators: a) chitin synthesis inhibitors: benzoylureas: chlorfluazuron, cyramazin, diflubenzuron, flucycloxuron, flufenoxuron, hexaflumuron, lufenuron, novaluron, teflubenzuron, triflumuron; buprofezin, diofenolan, hexythiazox, etoxazole, clofentazine; b) ecdysone antagonists: halofenozide, methoxyfenozide, tebufenozide, azadirachtin; c) juvenoids: pyriproxyfen, methoprene, fenoxycarb; d) lipid biosynthesis inhibitors: spirodiclofen, spiromesifen, spirotetramat;
- nicotinic receptor agonists/antagonists compounds: clothianidin, dinotefuran, imidacloprid, thiamethoxam, nitenpyram, acetamiprid, thiacloprid, 1-(2-chloro-thiazol-5-ylmethyl)-2-nitrimino-3,5-dimethyl-[1,3,5]triazinane;
- GABA antagonist compounds: endosulfan, ethiprole, fipronil, vaniliprole, pyrafluprole, pyriprole, 5-amino-1-(2,6-dichloro-4-methyl-phenyl)-4-sulfinamoyl-1 H-pyrazole-3-carbothioic acid amide;
- macrocyclic lactone insecticides: abamectin, emamectin, milbemectin, lepimectin, spinosad, spinetoram;
- mitochondrial electron transport inhibitor (METI) I acaricides: fenazaquin, pyridaben, tebufenpyrad, tolfenpyrad, flufenerim;
- METI II and III compounds: acequinocyl, fluacyprim, hydramethylnon;
- Uncouplers: chlorfenapyr;
- oxidative phosphorylation inhibitors: cyhexatin, diafenthiuron, fenbutatin oxide, propargite;
- moulting disruptor compounds: cryomazine;
- mixed function oxidase inhibitors: piperonyl butoxide;
- sodium channel blockers: indoxacarb, metaflumizone;
- others: benclothiaz, bifenazate, cartap, flonicamid, pyridalyl, pymetrozine, sulfur, thiocyclam, flubendiamide, chlorantraniliprole, cyazypyr (HGW86), cyenopyrafen, flupyrazofos, cyflumetofen, amidoflumet, imicyafos, bistrifluron, and pyrifluquinazon.

Preferably, the **encapsulated pesticide** comprises at least one of the aforementioned pesticides. More preferably, the encapsulated pesticide comprises a fungicide, a safeners and/or a growth regulator. Even more preferred, the encapsulated pesticide comprises a fungicide, and/or a growth regulator. Especially preferred, the encapsulated pesticide comprises a **fungicide,** such as a strobilurin, a triazole or a carboxamide. The encapsulated pesticide comprises most especially preferred pyraclostrobin or a 1-methylpyrazol-4-ylcarboxanilide of the formula I, preferably pyraclostrobin. In case the encapsulated pesticide comprises a **growth regulator,** the growth regulator is preferably an ethylene biosynthesis inhibitor which blocks the conversion of ACC into ethylene, an inhibitors of the action of ethylene, salicylic acid, azibenzolar-S-methyl, prohexadione-Ca, trinexapac-ethyl, cyclopropene and its derivatives, more preferably salicylic acid, azibenzolar-S-methyl, prohexadione-Ca, trinexapac-ethyl or 1-methylcyclopropene.

In another preferred embodiment, the encapsulated pesticide has a **solubility** in an aromatic hydrocarbon solvent (preferably in an an aromatic hydrocarbon with a distillation range 232-278 °C, e.g. Aromatic® 200 from Exxon) at 20 °C of at least 5 g/l, more preferably at least 50 g/l, even more preferably at least 150 g/l, especially preferred at least 200 g/l and most preferred at least 300 g/l.

In a preferred embodiment, the method according to the invention comprises the treatment with a mixture of an encapsulated pesticide and a **non-encapsulated, additional pesticide.** The additional pesticide may be selected from the aforementioned pesticides. The non-encapsulated, additional pesticide may be present in a dissolved, suspended and/or emulsified form. Preferably, the non-encapsulated, additional pesticide is present in a dissolved form. The non-encapsulated, additional pesticide may comprise a fungicide, a herbicide, an insecticide or a growth regulator. A suitable **fungicide** may be a strobilurin, a triazole or a carboxamide, more preferably a triazole. A suitable **herbicide** may be an amino acid derivative, a cyclohexanedione, an imidazolinone, or dicamba, preferably glyphosate, glufosinate, cycloxydim, an imidazolinone or dicamba. A suitable **insecticide** may be a pyrethroid or a nicotinic receptor agonists/antagonists compound, more preferably a pyrethroid, especially alpha-cypermethrin. A suitable **growth regulator** may be chlormequat chloride, mepiquat chloride, salicylic acid, azibenzolar-S-methyl, prohexadione-Ca, trinexapac-ethyl, cyclopropene and its derivatives, more preferably chlormequat chloride, salicylic acid, azibenzolar-S-methyl, prohexadione-Ca, trinexapac-ethyl or 1-methylcyclopropene.

In a more preferred embodiment, the encapsulated pesticide comprises a **fungicide** and the non-encapsulated, additional pesticide comprises a **fungicide,** wherein the fungicides might be identical or different. Preferably, the encapsulated pesticide comprises a strobilurin or a carboxamide, and the non-encapsulated, additional pesticide comprises a triazole or a carboxamide. In an especially preferred embodiment, the encapsulated pesticide comprises pyraclostrobin, and the non-encapsulated, additional pesticide comprises epoxiconazol, metconazol, boscalid or a 1-methylpyrazol-4-ylcarboxanilide of the formula I. In another especially preferred embodiment, the encapsulated pesticide comprises a 1-methylpyrazol-4-ylcarboxanilide of the formula I, and the non-encapsulated, additional pesticide comprises epoxiconazol or metconazol. In an especially preferred embodiment, the encapsulated pesticide comprises **pyraclostrobin,** and the non-encapsulated, additional pesticide comprises epoxiconazol, metconazol, boscalid or **fluxapyroxad.**

In another more preferred embodiment, the encapsulated pesticide comprises **pyraclostrobin** and the non-encapsulated, additional pesticide comprises **glyphosate, glufosinate, dicamba, imazamox, imazapyr, or imazethapyr.**

In yet another more preferred embodiment, the encapsulated pesticide comprises **pyraclostrobin** and the non-encapsulated, additional pesticide comprises **chlormequat chloride, mepiquat chloride, mepiquat pentaborate or prohexadione-Ca.**

In yet another more preferred embodiment, the encapsulated pesticide comprises **pyraclostrobin** and the non-encapsulated, additional pesticide comprises **alphacypermethrin or fipronil**.

The method of the present invention is particularly suitable for controlling the following **plant diseases:**
*Albugo* spp. in sunflowers (e. g. *A. tragopogonis*) and rape (*A. candida*); *Alternaria* spp. rape (*A. brassicola* or *brassicae*) and sunflowers (A. helianth), *Bipolaris* and *Drechslera* spp. (teleomorph: *Cochliobolus* spp.), e. g. Southern leaf blight (*D. maydis) or* Northern leaf blight (*B. zeicola*) on corn, Aureobasidium zeae (syn. Kabatiella zeae) on corn, *Botrytis cinerea* (teleomorph: *Botryotinia fuckeliana*: grey mold) on rape, *Cercospora* spp. (Cercospora leaf spots) on corn (e.g. Gray leaf spot: *C. zeae-maydis*), sugar cane, (e. g. *C. sojina* or *C. kikuchii*); *Cladosporium herbarum* on corn; *Cochliobolus* (anamorph: *Helminthosporium* of *Bipolaris*) spp. (leaf spots) on corn (*C*. *carbonum*), *Colletotrichum* (teleomorph: *Glomerella*) spp. (anthracnose) on corn (e. g. *C. graminicola:* Anthracnose stalk rot); *Drechslera* (syn. *Helminthosporium*, teleomorph: *Pyrenophora*) spp. on corn, *Epicoccum* spp. rape (e. g. *E. cruciferarum*); *Exserohilum* (syn. *Helminthosporium*) spp. on corn (e. g. *E. turcicum*); *Fusarium* (teleomorph: *Gibberella*) spp. (wilt, root or stem rot) on various plants, such *as F. moniliforme, F. proliferatum, F. subglutinans, F. verticillioides and F. zeae* (Fusarium graminearum) on corn; *Gaeumannomyces graminis* (take-all) on corn; *Helminthosporium* spp. (syn. *Drechslera,* teleomorph: *Cochliobolus*) on corn; *Macrophomina phaseolina* on corn; eyespot on corn *(Kabatiella zeae); Peronospora* spp. (downy mildew) rape (e. g. *P. parasitica*); *Phoma lingam* (root and stem rot) on rape and Phoma macdonaldii on sunflowers; *Phomopsis* spp. on sunflowers; *Physoderma maydis* (brown spots) on corn; *Plasmodiophora brassicae* (club root) on rape; *Plasmopara* spp., *P. halstedii* on sunflower, Puccinia helianthi in sunflower, *Pythium* spp. (damping-off) on corn, rape and sunflowers; *Rhizoctonia* spp. corn, rape; *Sclerotinia* spp. (stem rot or white mold) on field crops, such as rape and sunflowers (e. g. *S. sclerotiorum*); *Setosphaeria* spp. (leaf blight) on corn (e. *g. S. turcicum,* syn. *Helminthosporium turcicum*); *Sphacelotheca* spp. (smut) on corn, (e. g. *S. reiliana*: head smut); Stenocarpella macrospore on corn; *Urocystis* spp. e. g. corn (e. g. *U. maydis*: corn smut) and sugar cane; and *Verticillium* spp. (wilt) on various plants, such as field crops, e. *g. V. dahliae* on rape, *Puccinia* spp. in corn (*P. sorghi and P. polysora*), sunflower (*P. helianthi*), sugarcane (*P. kuehnii* and *P. melanocephela*). In another embodiment, the present invention is specifically suitable to control *Sclerotinia sclerotiorum* and *Alterneria brassicae* in oilseed rape.

The method according to the invention may be used for improving the health of the crop. The term **"plant health"** is to be understood to denote a condition of the plant and/or its products which is determined by several indicators alone or in combination with each other such as yield (e. g. increased biomass and/or increased content of valuable ingredients), plant vigor (e. g. improved plant growth and/or greener leaves ("greening effect")), quality (e. g. improved content or composition of certain ingredients), tolerance to abiotic and/or biotic stress and production efficiency (increased harvesting efficiency). The above identified indicators for the health condition of a plant may be interdependent or may result from each other.

The encapsulated pesticide may be formulated in an **agrochemical composition.** An agrochemical composition comprises a pesticidal effective amount of a pesticide. The term "effective amount" denotes an amount of the pesticide, which is sufficient for controlling harmful pests on cultivated and which does not result in a substantial damage to the treated plants. Such an amount can vary in a broad range and is dependent on various factors, such as the fungal species to be controlled, the treated cultivated plant, the climatic conditions and the specific pesticide used.

The agrochemical compositions may also comprise **auxiliaries** which are customary in agrochemical compositions. The auxiliaries used depend on the particular application form and active substance, respectively. Examples for suitable auxiliaries are solvents, solid carriers, dispersants or emulsifiers (such as further solubilizers, protective colloids, surfactants and adhesion agents), organic and anorganic thickeners, bactericides, anti-freezing agents or anti-foaming agents.

Suitable **solvents** are water, organic solvents such as mineral oil fractions of medium to high boiling point, such as kerosene or diesel oil, furthermore coal tar oils and oils of vegetable or animal origin, aliphatic, cyclic and aromatic hydrocarbons, e. g. toluene, xylene, paraffin, tetrahydronaphthalene, alkylated naphthalenes or their derivatives, alcohols such as methanol, ethanol, propanol, butanol and cyclohexanol, glycols, ketones such as cyclohexanone and gamma-butyrolactone, fatty acid dimethylamides, fatty acids and fatty acid esters and strongly polar solvents, e. g. amines such as N-methylpyrrolidone.

Suitable **surfactants** (adjuvants, wtters, tackifiers, dispersants or emulsifiers) are alkali metal, alkaline earth metal and ammonium salts of aromatic sulfonic acids, such as ligninsulfonic acid (Borresperse^{®} types, Borregard, Norway) phenolsulfonic acid, naphthalenesulfonic acid (Morwet^{®} types, Akzo Nobel, U.S.A.), dibutylnaphthalene-sulfonic acid (Nekal^{®} types, BASF, Germany),and fatty acids, alkylsulfonates, alkylarylsulfonates, alkyl sulfates, laurylether sulfates, fatty alcohol sulfates, and sulfated hexa-, hepta- and octadecanolates, sulfated fatty alcohol glycol ethers, furthermore condensates of naphthalene or of naphthalenesulfonic acid with phenol and formaldehyde, polyoxy-ethylene octylphenyl ether, ethoxylated isooctylphenol, octylphenol, nonylphenol, alkylphenyl polyglycol ethers, tributylphenyl polyglycol ether, tristearyl-phenyl polyglycol ether, alkylaryl polyether alcohols, alcohol and fatty alcohol/ethylene oxide condensates, ethoxylated castor oil, polyoxyethylene alkyl ethers, ethoxylated polyoxypropylene, lauryl alcohol polyglycol ether acetal, sorbitol esters, lignin-sulfite waste liquors and proteins, denatured proteins, polysaccharides (e. g. methylcellulose), hydrophobically modified starches, polyvinyl alcohols (Mowiol^{®} types, Clariant, Switzerland), polycarboxylates (Sokolan^{®} types, BASF, Germany), polyalkoxylates, polyvinylamines (Lupasol^{®} types, BASF, Germany), polyvinylpyrrolidone and the copolymers therof.

Examples for **thickeners** (i. e. compounds that impart a modified flowability to compositions, i. e. high viscosity under static conditions and low viscosity during agitation) are polysaccharides and organic and anorganic clays such as Xanthan gum (Kelzan^{®}, CP Kelco, U.S.A.), Rhodopol^{®} 23 (Rhodia, France), Veegum^{®} (R.T. Vanderbilt, U.S.A.) or Attaclay^{®} (Engelhard Corp., NJ, USA). **Bactericides** may be added for preservation and stabilization of the composition. Examples for suitable bactericides are those based on dichlorophene and benzylalcohol hemi formal (Proxel^{®} from ICI or Acticide^{®} RS from Thor Chemie and Kathon^{®} MK from Rohm & Haas) and isothiazolinone derivatives such as alkylisothiazolinones and benzisothiazolinones (Acticide^{®} MBS from Thor Chemie). Examples for suitable **anti-freezing** agents are ethylene glycol, propylene glycol, urea and glycerin. Examples for anti-foaming agents are silicone emulsions (such as e. g. Silikon^{®} SRE, Wacker, Germany or Rhodorsil^{®}, Rhodia, France), long chain alcohols, fatty acids, salts of fatty acids, fluoroorganic compounds and mixtures thereof.

Various types of oils, wetters, adjuvants, herbicides, bactericides, other fungicides and/or pesticides may be added to the pesticide or the compositions comprising them, if appropriate not until immediately prior to use **(tank mix).** These agents can be admixed with the compositions according to the invention in a weight ratio of 1:100 to 100:1, preferably 1:10 to 10:1. Adjuvants which can be used are in particular polyether modified polysiloxanes such as Break Thru® S 240; fatty alcohol alkoxylates such as Plurafac® LF 120 (BASF) and Lutensol® ON 30 (BASF); EO/PO block polymers, e. g. Pluronic® RPE 2035 and Genapol B, alcohol ethoxylates such as Lutensol XP 80^{®}; dioctyl sulfosuccinate sodium such as Leophen RA^{®}, polyvinylalcohols, such as Plurafac® LF 240 (BASF). Especially preferred adjuvants are fatty alcohol alkoxylates and polyether modified polysiloxanes.

The treatment of crop with an encapsulated pesticide may be done by applying said pesticide by **ground or aerial application,** preferably by ground application. Suitable application devices are a predosage device, a knapsack sprayer, a spray tank or a spray plane. Preferably the treatment is done by ground application, for example by a predosage device, a knapsack sprayer or a spray tank. The ground application may be done by a user walking through the crop field or with a motor vehicle, preferably with a motor vehicle. Such motor vehicles may have standard ground clearance, such as up to 100 cm, preferably up to 85 cm, especially up to 70 cm. Usually, 50 to 500 liters of the ready-to-use spray liquor are applied per hectare of agricultural useful area, preferably 80 to 400 litres. The amounts of pesticides applied are usually, depending on the kind of effect desired, from 0.001 to 3 **kg per ha,** preferably from 0.005 to 2 kg per ha, more preferably from 0.05 to 0.9 kg per ha, in particular from 0.1 to 0.75 kg per ha. The method according the invention often helps to avoid areal application of the pesticides. Thus, the method according to the invention is useful for the treatment of crops outside closed buildings (such as greenhouses) and/or outside artificial growth pots (such as growth pots made of plastic, peat pots, seedling trays). Preferably, the crops grow directly in cropping soil of farmland. This means, the crops do not grow inside artificial growth pots. The term **"encapsulated pesticide"** refers to any type of capsule, which comprises a core and an encapsulation material, wherein the core comprises at least one pesticide dissolved in at least one organic solvent, wherein at least 80 wt%, preferably at least 90 wt%, of the pesticide in the core is dissolved in the organic solvent(s) at 25 °C. The encapsulation material of the encapsulated pesticide comprises a **polyu-**rethane as defined in claim 1.

Capsules with encapsulation material comprising a **polyurethane** are well known and can be prepared by analogy to prior art. They are preferably prepared by an interfacial polymerization process of a suitable polymer wall forming material. Interfacial polymerization is usually performed in an aqueous water-in-oil emulsion or suspension of the core material containing dissolved therein at least one part of the polymer wall forming ma-terial. During the polymerization, the polymer segregates from the core material to the boundary surface between the core material and water thereby forming the wall of the microcapsule. Thereby an aqueous suspension of the microcapsule material is ob-tained. Suitable methods for interfacial polymerization processes for preparing microcapsules containing pesticide compounds have been disclosed in prior art, e.g. US 3,577,515, US 4,280,833, US 5,049,182, US 5,229,122, US 5,310,721, US 5,705,174, US 5,910,314, WO 95/13698, WO 00/10392, WO 01/68234, WO 03/099005, EP 619,073 or EP 1,109,450.

The wall forming materials for polyurethane capsules comprises polyfunctional isocyanate (also called polyisocyanate) and polyfunctional amine (also called polyamine) in polymerized form.
It is also known, that an isocyanate group may react with water to a carbamic acid group, which in turn may eliminate carbon dioxide to yield finally an amine group.
In a further embodiment, the 2-component system polyfunctional isocyanate/polyfunctional amine may be prepared by reacting the polyfunctional isocyanate with water. In general, polyurethane is formed by reacting a **polyisocyanate,** having at least two isocyanate groups with a polyamine having at least two primary amino groups, optionally in the presence of a polyfunctional acid chloride, to form a polyurea wall material. Polyisocyanates may be used individually or as mixtures of two or more Polyisocyanates. Polyisocyanates which are suitable for use include di- and triisocyanates, wherein the isocyanate groups are attached to an aliphatic or cycloaliphatic moiety (aliphatic isocyanates) or to an aromatic moiety (aromatic isocyanates). Examples of suitable **aliphatic diisocyanates** include tetramethylene diisocyanate, pentamethylene diisocyanate and hexamethylene diisocyanate as well as cycloaliphatic isocycantates such as isophoronediisocyanate, 1,4-bisisocyanatocyclohexane and bis-(4-isocyanato-cyclohexyl)methane. Suitable **aromatic isocyanates** include toluene diisocyanates (TDI: a mixture of the 2,4- and 2,6-isomers), diphenylmethene-4,4'-diisocyanate (MDI), polymethylene polyphenyl isocyanate, 2,4,4'-diphenyl ether triisocyanate, 3,3'-dimethyl-4,4'-diphenyl diisocyanate, 3,3'-dimethoxy-4,4'-diphenyl diisocyanate, 1,5-naphthylene diisocyanate and 4,4',4"-triphenylmethane triisocyanate. Also suitable are higher oligomers of the aforementiende diisocyanates such as the isocyanurates and biurethes of the aforementioned diisocyanates and mixtures thereof with the aforementioned diisocyanates.

In another preferred embodiment,the polyisocyanate is an oligomeric isocyanates. Such oligomeric isocyanates may comprise above mentioned aliphatic diisocyanates and/or aromatic isocyanates in oligomerized form. The oligomeric isocyanates have an average functionality in the range of 2,0 to 4,0, preferably 2,1 to 3,2, an more preferably 2,3 to 3,0. Typically, these oligomeric isocyanates have a viscosity (determined according to DIN 53018) in the range from 20 to 1000 mPas, more preferably from 80 to 500 mPas and especially from 150 to 320 mPas. Such oligomeric isocyanates are commercially available, for example from BASF SE under the tradenames Lupranat® M10, Lupranat® M20, Lupranat® M50, Lupranat® M70, Lupranat® M200, Lupranat® MM103 or from Bayer AG as Basonat® A270.

Preferred polyisocyanates are isophorone diisocyanate, diphenylmethane-4,4'-diisocyanate, toluene diisocyanates. In another embodiment, preferred polyisocyanates are oligomeric isocyanates.
Suitable **polyamines** within the scope of this invention are α,ω-diamines of the formula H₂N-(CH₂)ₙ-NH₂, wherein n is an integer from 2 to 6. Exemplary of such diamines are ethylenediamine, propylene-1,3-diamine, tetramethylenediamine, pentamethylenediamine and hexame-thylenediamine. A preferred diamine is hexamethylenediamine. Polyamines, such as those mentioned above may be used individually or as mixtures of two or more polyamines.
The relative **amounts** of each complementary wall-forming component will vary with their equivalent weights. An excess of polyisocyanate is preferred. The total amount of wall-forming components approximately corresponds to the total amount of polymeric wall-forming materials.
The invention also relates to a **composition comprising an encapsulated pesticide,** wherein the pesticide is a **strobilurin** and the encapsulation material of the encapsulated pesticide comprises polyurethane as defined in claim 1.
Such a composition is especially suited for the method according to the invention and the use according to the invention. Preferably, the strobilurin is azoxystrobin, dimoxystrobin, enestroburin, fluoxastrobin, kresoxim-methyl, metominostrobin, orysastrobin, picoxystrobin, pyraclostrobin, pyribencarb, trifloxystrobin. More preferably, the strobilurin is pyraclostrobin. Suitable polyurethane encapsulation material and its preparation is as decribed above. Typically, the polyurethane comprises polyfunctional isocyanate and polyfunctional amine in polymerized form. Preferred polyisocyanates are isophorone diisocyanate, diphenylmethane-4,4'-diisocyanate, and toluene diisocyanates. In another preferred embodiment, the polyisocyanate comprises an aromatic polyisocyanate, such as toluene diisocyanates (TDI: a mixture of the 2,4- and 2,6-isomers), diphenylmethene-4,4'-diisocyanate (MDI), preferably MDI. In another preferred embodiment, the polyisocyanate comprises an oligomeric isocyanate, which are described above. Polyfunctional amines are α,ω-diamines of the formula H₂N-(CH₂)ₙ-NH₂, wherein n is an integer from 2 to 6. Examples of such diamines are ethylenediamine, propylene-1,3-diamine, tetramethylenediamine, pentamethylenediamine and hexame-thylenediamine. A preferred diamine is hexamethylenediamine.
The composition comprising an encapsulated pesticide, wherein the pesticide is a strobilurin and the encapsulation material of the encapsulated pesticide comprises polyurethane preferably comprises 10 to 450 g/l encapsulated strobilurin, 50 to 450 g/l organic solvent, 1 to 100 g/l surfactant (nonionic and/or anionic surfactant), and water up to 1,0 I. More preferably, said composition comprises 100 to 350 g/l encapsulated strobilurin, 150 to 400 g/l organic solvent, 10 to 60 g/l surfactant, and water up to 1,0 l.
As characterizing feature, the capsule wall material in such composition comprises 50 to 150 g/l polyisocyanate and 1 to 10 g/l polyamine. Examples for suitable organic solvent are mineral oil fractions of medium to high boiling point, such as kerosene or diesel oil, furthermore coal tar oils and oils of vegetable or animal origin, aliphatic, cyclic and aromatic hydrocarbons, e. g. toluene, xylene, paraffin, tetrahydronaphthalene, alkylated naphthalenes or their derivatives. Preferably, the core of the encapsulated pesticide comprises at least one strobilurine and at least one organic solvent (such as aliphatic, cyclic and aromatic hydrocarbons). In an especially preferred embodiment, the core of the encapsulated pesticide comprises at least one strobilurine dissolved in at least one organic solvent. Suitable surfactans are as listed above. Preferably, a mixture of at least two different surfactants is used. More preferably, the surfactant is a mixture of a non-ionic and ionic surfactant. Said composition may also comprise auxiliaries which are customary in agrochemical compositions. Examples for suitable auxiliaries are solvents, solid carriers, dispersants or emulsifiers (such as further solubilizers, protective colloids, surfactants and adhesion agents), organic and anorganic thickeners, bactericides, anti-freezing agents or anti-foaming agents. Suitable examples of such auxiliaries are as listed above.
The invention also relates to a **composition comprising an encapsulated pesticide,** wherein the pesticide is a pesticide, which is **dissolved** in at least one organic solvent, and the encapsulation material of the encapsulated pesticide comprises polyurethane as defined in claim 1.
Such a composition is especially suited for the method according to the invention and the use according to the invention. The organic solvent is preferably an aprotic organic solvent, more preferably mineral oil fractions of medium to high boiling point, such as kerosene or diesel oil, furthermore coal tar oils and oils of vegetable or animal origin, aliphatic, cyclic and aromatic hydrocarbons, e. g. toluene, xylene, paraffin, tetrahydronaphthalene, alkylated naphthalenes or their derivatives. Most preferred organic solvents preferably an aliphatic, cyclic and aromatic hydrocarbons. Preferably, the pesticide, which is dissolved in at least one organic solvent is a strobilurin, such as azoxystrobin, dimoxystrobin, enestroburin, fluoxastrobin, kresoxim-methyl, metominostrobin, orysastrobin, picoxystrobin, pyraclostrobin, pyribencarb, trifloxystrobin. More preferably, the strobilurin is pyraclostrobin. Suitable polyurethane encapsulation material and its preparation is as decribed above. Typically, the polyurethane comprises polyfunctional isocyanate and polyfunctional amine in polymerized form as defined above. Preferred polyisocyanates are isophorone diisocyanate, diphenylmethane-4,4'-diisocyanate, and toluene diisocyanates. In another preferred embodiment, the polyisocyanate comprises an aromatic polyisocyanate, such as toluene diisocyanates (TDI: a mixture of t he 2,4- and 2,6-isomers), diphenylmethene-4,4'-diisocyanate (MDI), preferably MDI. In another preferred embodiment, the polyisocyanate comprises an oligomeric isocyanate, which are described above. Polyfunctional amines are α,ω-diamines of the formula H₂N-(CH₂)ₙ-NH₂, wherein n is an integer from 2 to 6. Examples of such diamines are ethylenediamine, propylene-1,3-diamine, tetramethylenediamine, pentamethylenediamine and hexame-thylenediamine. A preferred diamine is hexamethylenediamine.
The composition comprising an encapsulated pesticide, wherein the pesticide is a pesticide, which is dissolved in at least one organic solvent, and the encapsulation material of the encapsulated pesticide comprises polyurethane preferably comprises 10 to 450 g/l encapsulated pesticide (e.g. a strobilurin), 50 to 450 g/l organic solvent, 1 to 100 g/l surfactant (nonionic and/or anionic surfactant), and water up to 1,0 l. More preferably,
said composition comprises 100 to 350 g/l encapsulated pesticide (e.g. strobilurin), 150 to 400 g/l organic solvent, 10 to 60 g/l surfactant, and water up to 1,0 l. As characterizing feature, the capsule wall material in such composition comprises 50 to 150 g/l polyisocyanate and 1 to 10 g/l polyamine. Examples for suitable organic solvent are mineral oil fractions of medium to high boiling point, such as kerosene or diesel oil, furthermore coal tar oils and oils of vegetable or animal origin, aliphatic, cyclic and aromatic hydrocarbons, e. g. toluene, xylene, paraffin, tetrahydronaphthalene, alkylated naphthalenes or their derivatives. Preferably, the core of the encapsulated pesticide comprises at least one strobilurine and at least one organic solvent (such as aliphatic, cyclic and aromatic hydrocarbons). Suitable surfactans are as listed above. Preferably, a mixture of at least two different surfactants is used. More preferably, the surfactant is a mixture of a non-ionic and ionic surfactant. Said composition may also comprise auxiliaries which are customary in agrochemical compositions. Examples for suitable auxiliaries are solvents, solid carriers, dispersants or emulsifiers (such as further solubilizers, protective colloids, surfactants and adhesion agents), organic and anorganic thickeners, bactericides, anti-freezing agents or anti-foaming agents. Suitable examples of such auxiliaries are as listed above.
The invention further relates to a **composition comprising a mixture of an encapsulated pesticides** defined in claim 1 and **a non-encapsulated, additional pesticide,** wherein the encapsulated pesticide comprises a strobilurin or a carboxamide, and the non-encapsulated, additional pesticide comprises a triazole or a carboxamide. Such a composition is especially suitable for the method according to the invention and the use according to the invention. In a preferred embodiment, the encapsulated pesticide comprises pyraclostrobin, and the non-encapsulated, additional pesticide comprises epoxiconazol, metconazol, boscalid or a 1-methylpyrazol-4-ylcarboxanilide of the formula I. In another preferred embodiment, the encapsulated pesticide comprises a 1-methylpyrazol-4-ylcarboxanilide of the formula I, and the non-encapsulated, additional pesticide comprises epoxiconazol or metconazol. The encapsulation material of the encapsulated pesticide comprises polyurethane as decribed in claim 1.
Preferably, the core of the encapsulated pesticide comprises at least one pesticide and at least one organic solvent (such as aliphatic, cyclic and aromatic hydrocarbons). In an especially preferred embodiment, the core of the encapsulated pesticide comprises at least one pesticide dissolved in at least one organic solvent. The composition preferably comprises 10 to 450 g/l encapsulated pesticide, 50 to 450 g/l organic solvent, 1 to 100 g/l surfactant (nonionic and/or anionic surfactant), and water up to 1,0 l. More preferably, said composition comprises 100 to 350 g/l encapsulated pesticide, 150 to 400 g/l organic solvent, 10 to 60 g/l surfactant, and water up to 1,0 l. As characterizing feature, the capsule wall material in such composition comprises 50 to 150 g/l polyisocyanate and 1 to 10 g/l polyamine. Said composition may also comprise auxiliaries which are customary in agrochemical compositions. Examples for suitable auxiliaries are surfactants, solvents, solid carriers, dispersants or emulsifiers (such as further solubilizers, protective colloids, surfactants and adhesion agents), organic and anorganic thickeners, bactericides, anti-freezing agents or anti-foaming agents. Suitable examples of such auxiliaries are as listed above. Suitable surfactans are as listed above. Preferably, a mixture of at least two different surfactants is used. More preferably, the surfactant is a mixture of a non-ionic and ionic surfactant.
The invention also relates to a **use** of an encapsulated pesticide as defined above for the pesticidal treatment of crop which has a final growth height of at least 140 cm at a growth height of the crop of up to 120 cm. Preferably, the crop is corn, sunflower, oilseed rape, sugar cane, sorghum or miscanthus. In another preferred embodiment, said use is for pesticidal treatment by ground application. Suitable pesticides, encapsulation materials, final growth height, growth heights of the crop and pesticidal treatments are as described above.

There are several **advantages** of the present invention: The crops may be treated earlier then usual whist still providing the yield equivalent to the optimum timing which is later in growth stage. Thus, the crop plants are smaller at the time of application and may be treated not only by aerial application, but also from the ground by standard equipment. Fewer applications, especially in corn, allow more economic and less time consuming crop protection. The farmer can use his own equipment so there is a cost saving and application timing can be decided by the grower. There is a limit on the area that can be treated via aerial application equipment due to numbers of planes available to treat crops, particularly in the USA. Aerial application is not an option in most countries around the world, so at present growers have to apply at a less optimum timing to gain access to the crop with conventional equipment resulting in yield responses, which are less than could be achieved with a later application timing. Another advantage is that less damage is caused to crop by treating at an earlier growth stage, in which the crop plants are smaller. The compositions according to the invention are especially advantageous for the method and the use according to the invention, because they allow the aforementioned advantages of said method. The compositions according to the invention show also very good draining properties when drained out of their packagings, thus allowing a safe and efficient handling for the farmers. The compositions according to the invention, especially the composition comprising the encapsulated pesticide, allow the encapsulation of very high concentrations of pesticides, resulting in a high pesticide loading of the composition.

The inventive examples below give further illustration of the invention.

### Examples

Agnique® NSC 11 NP: Naphthalene sulfonate condensate, 11 wt% inorganic salt, pH 9,5 as 10wt% solution in water (commercially available from Cognis).
Caramba®: Watersoluble concetrate comprising 6,7 wt% metconazol, about 22 wt % naphta, about 26 wt% amylalcohol and about 45 wt% alkylpolyoxyethene glycolether (commercially available from BASF SE).
Culminal® MHPC100: Methylhydroxyporpyl cellulose (commercially available from Hercules).
Headline®: an emulsion concentrate, which comprises 23,6 wt% pyraclostrobin and 57,2 wt% solventnaphtha (commercially available from BASF SE).
Lupranate® M20 S: solvent free polyisocyanate based on 4,4'-diphenylmethane diisocyanate (MDI) with an average functionality of 2,7, NCO content 31,8 g/100 g (ASTM D 5155-96 A), acidity as HCL 150 mg/kg (ASTM D 1638-74) (commercially available from Elastogran).
Lupranate® T 80 A: Isomeric mixture of 80 wt% 2,4- and 20 wt% 2,6-toluylene diisocyanate (TDI) (commercially available from Elastogran).
Polyisocyanate C: solvent free polyisocyanate based on 4,4'-diphenylmethane diisocyanate (MDI) with an average functionality of 2,5 - 2,8, NCO content 30-35 g/100 g (determined by ASTM D 5155-96 A).
Mowiol® 15 99: Fully hydrolyzed polyvinyl alcohol, viscosity 12,5-17,5 mPas (DIN 53015) (commercially available from Kuraray).
Pyraclo-SC: a suspension concentrate comprising pyraclostrobin.
Pyraclo-WP: a wettable powder comprising pyraclostrobin.

### Example 1 - Polyurethane (PU) capsules of pyraclostrobin

The suspension of PU capsules of Table 1A and 1B were prepared using the concentration [g/l; referring to the concentration in the overall suspension] as summarized in Table 1.

The water phase comprising water, protective colloid (e.g. Mowiol, Culminal, dispersant) was prepared under nitrogen antmosphere. Under intensive stirring a mixture of the diisocyanate and the pyraclostrobin dissolved in Solvesso were added and dispersed in the aqueous phase for 15 min at 40 °C. Next, the diamine was added within 1 h while stirring and heating for 1 h at 60 °C and 2 h at 80 °C. The particle size was determined as z-average by means of light scattering on a Malvern Mastersizer. The capsules listed in Table 1B had a particle size of D₉₀ 4,0 to 6,0 µm and D_{4,3} of 2,0 to 2,5 µm. The residue after evaporation was determined by heating the capsules for 2 h at 105 °C and subsequently 1 h at 130 °C. The solid content was determined by heating the capsule suspension for 2 h at 105 °C.

PU-1, PU-2 and PU-4 are comparative examples.

**Table 1A: Recipes for PU Capsules (concentration in g/l)**

| Capsules | PU-1 | PU-2 | PU-3 | PU-4 |
|---|---|---|---|---|
| Pyraclostrobin | 200 | 160 | 250 | 200 |
| Bakterizide | 2,68 | - | 2,0 | 2,0 |
| Agnique NSC 11NP | 12,9 | - | - | - |
| Non-ionic surfactant | 10,7 | - | 15 | 15 |
| Culminal MHPC 100 | - | 178,4 | - | - |
| Antifoaming agent | 1,1 | - | 2,0 | 2,0 |
| Lupranate M 20 S | 96,5 | - | 95 | 95 |
| Lupranat T 80 | 10,7 | - | - | - |
| Mowiol 15 99 | - | 43 | - | - |
| N,N'-Bis(3-aminopropyl) ethylene diamine | - | 66,5 | - | - |
| Hexamethylendiamine | - | - | 3,75 | - |
| Isophorone diisocyanate | - | 26,8 | - | - |
| Solvesso 200 | 296 | 240,9 | 250 | 300 |
| Xanthan gum | 1,1 | - | 1,0 | 0,25 |
| Water | ad 1000 ml | ad 1000 ml | ad 1000 ml | ad 1000 ml |
| Particle size | - | 1,3 µm | - | - |
| Solid content | - | 46 wt% | - | - |
| Residue after evaporation | - | 2,7 wt% | - | - |

**Table 1B: Recipes for PU Capsules (concentration in g/l)**

| Capsules | PU-5 | PU-6 | PU-7 | PU-8 |
|---|---|---|---|---|
| Pyraclostrobin | 250 | 250 | 200 | 200 |
| Bakterizide | 2,0 | 2,0 | 2,0 | 2,0 |
| Non-ionic surfactant | 15 | 15 | 15 | 15 |
| Anionic dispersant | 13 | 13 | 13 | 13 |
| Antifoaming agent | 2,0 | 2,0 | 2,0 | 2,0 |
| Polyisocyanate C | 95 | 95 | 95 | 95 |
| Hexamethylendiamine | 7,5 | 3,8 | 7,5 | 3,8 |
| Solvesso 200 | 250 | 250 | 300 | 300 |
| Xanthan gum | 0,3 | 1,0 | 0,3 | 1,0 |
| Water | ad 1000 ml | ad 1000 ml | ad 1000 ml | ad 1000 ml |
| Density | 1,084 | 1,084 | 1,070 | 1,070 |

## Claims

1. A composition comprising an encapsulated pesticide, wherein
(i) the encapsulation material of the encapsulated pesticide comprises polyfunctional isocyanate and α,ω-diamine of the formula H₂N-(CH₂)ₙ-NH₂, wherein n is an integer from 2 to 6 in polymerized form; and
(ii) in the core of the capsules at least 80% of the pesticide is dissolved in an organic solvent at 25°C, and
wherein the composition comprises 50 to 150 g/l polyisocyanate and 1 to 10 g/l α,ω--diamine

2. The composition according to claim 1, wherein the average particle size of the capsules is from 0.5 to 8µm.

3. The composition according to claim 1, wherein the average particle size of the capsules is from 1 to 3µm.

4. The composition according to any of claims 1 to 3 comprising 10 to 450 g/l encapsulated pesticide, 50 to 450 g/l organic solvent, 1 to 100 g/l surfactant (nonionic and/or anionic surfactant), and water up to 1,0 L

5. The composition according to any of claims 1 to 4, wherein the pesticide is a fungicide.

6. The composition according to claim 5, wherein the pesticide is a strobilurine fungicide.

7. The composition according to claim 5, wherein the fungicide is pyraclostrobin.

8. The composition according to claim 5, wherein the fungicide is a 1-methylpyrazol-4-ylcarboxanilide of the formula I 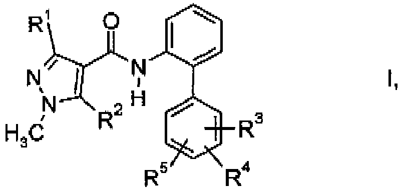 in which the substituents are as defined below:
R¹ is C₁-C₄-alkyl or C₁-C₄-haloalkyl;
R² is hydrogen;
R³, R⁴ and R⁵ independently of one another are cyano, nitro, halogen, C₁-C₄-alkyl, C₁-C₄-haloalkyl, C₁-C₄-alkoxy, C₁-C₄-haloalkoxy or C₁-C₄-alkylthio.

9. A composition according to any of claims 1 to 6, further comprising a non-encapsulated, additional pesticide, wherein the encapsulated pesticide comprises a strobilurin or a carboxamide, and the non-encapsulated, additional pesticide comprises a triazole or a carboxamide.

10. The composition according to claim 9, wherein the encapsulated pesticide comprises pyraclostrobin, and the non-encapsulated, additional pesticide comprises epoxiconazol, metconazol, boscalid or a 1-methylpyrazol-4-ylcarboxanilide of the formula I 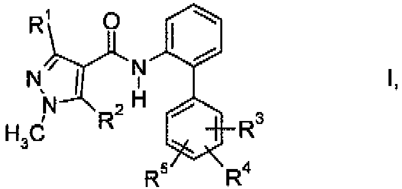 in which the substituents are as defined below:
R¹ is C₁-C₄-alkyl or C₁-C₄-haloalkyl;
R² is hydrogen;
R³, R⁴ and R⁵ independently of one another are cyano, nitro, halogen, C₁-C₄-alkyl, C₁-C₄-haloalkyl, C₁-C₄-alkoxy, C₁-C₄-haloalkoxy or C₁-C₄-alkylthio.

11. The composition according to claim 9, wherein the encapsulated pesticide comprises a 1 -methylpyrazol-4-ylcarboxanilide of the formula I according to claim 10, and the non-encapsulated, additional pesticide comprises epoxiconazol or metconazol.

12. A method for the pesticidal treatment of crops which have a final growth height of at least 140 cm, comprising the treatment with composition according to any of claims 1 to 11; wherein
(i) the crop is higher than 30 cm; and
(ii) the encapsulation material of the encapsulated pesticide comprises polyfunctional isocyanate and α,ω-diamine of the formula H₂N-(CH₂)ₙ-NH₂, wherein n is an integer from 2 to 6 in polymerized form; and
(iii) in the core of the capsules at least 80% of the pesticide is dissolved in an organic solvent at 25°C.

13. The method according to claim 12, wherein the treatment is done by ground application.

14. The method according to claim 12 or 13, wherein the crop is corn, sunflower, oilseed rape, sugar cane, sorghum or miscanthus.

15. The method according to claim 14, wherein the crop is corn, which is treated at its growth stage BBCH 10 to 51; sunflower, which is treated at its growth stage BBCH 10 to BBCH 69; oilseed rape, which is treated at its growth stage BBCH 10 to 69; sorghum, which is treated at its growth stage BBCH 10 to 51, or sugar cane, which is treated at its growth stage BBCH 11 to 49.

## Patentansprüche

1. Zusammensetzung, die ein verkapseltes Pestizid umfasst, wobei
(i) das Verkapselungsmaterial des verkapselten Pestizids mehrfunktionelles Isocyanat und ein α,ω-Diamin der Formel H₂N-(CH₂)ₙ-NH₂, worin n eine ganze Zahl von 2 bis 6 bedeutet, in polymerisierter Form umfasst; und
(ii) im Kern der Kapseln mindestens 80% des Pestizids in einem organischen Lösungsmittel bei 25°C gelöst ist, und
wobei die Zusammensetzung 50 bis 150 g/l Poly-isocyanat und 1 bis 10 g/l α,ω-Diamin umfasst.

2. Zusammensetzung nach Anspruch 1, wobei die durchschnittliche Teilchengröße der Kapseln 0,5 bis 8 µm beträgt.

3. Zusammensetzung nach Anspruch 1, wobei die durchschnittliche Teilchengröße der Kapseln 1 bis 3 µm beträgt.

4. Zusammensetzung nach einem der Ansprüche 1 bis 3, die 10 bis 450 g/l verkapseltes Pestizid, 50 bis 450 g/l organisches Lösungsmittel, 1 bis 100 g/l Tensid (nichtionisches und/oder anionisches Tensid) und Wasser auf 1,0 1 umfasst.

5. Zusammensetzung nach einem der Ansprüche 1 bis 4, wobei es sich bei dem Pestizid um ein Fungizid handelt.

6. Zusammensetzung nach Anspruch 5, wobei es sich bei dem Pestizid um ein Strobilurinfungizid handelt.

7. Zusammensetzung nach Anspruch 5, wobei es sich bei dem Fungizid um Pyraclostrobin handelt.

8. Zusammensetzung nach Anspruch 5, wobei es sich bei dem Fungizid um ein 1-Methylpyrazol-4-ylcarboxanilid der Formel I handelt 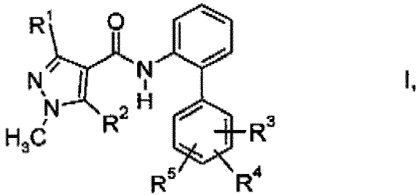 in der die Substituenten wie unten definiert sind:
R₁ ist C₁-C₄-Alkyl oder C₁-C₄-Halogenalkyl;
R² ist Wasserstoff;
R³, R⁴ und R⁵ sind unabhängig voneinander Cyano, Nitro, Halogen, C₁-C₄-Alkyl, C₁-C₄-Halogenalkyl, C₁-C₄-Alkoxy, C₁-C₄-Halogenalkoxy oder C₁-C₄-Alkylthio.

9. Zusammensetzung nach einem der Ansprüche 1 bis 6, die weiterhin ein nichtverkapseltes zusätzliches Pestizid umfasst, wobei das verkapselte Pestizid ein Strobilurin oder ein Carboxamid umfasst und das nicht verkapselte zusätzliche Pestizid ein Triazol oder ein Carboxamid umfasst.

10. Zusammensetzung nach Anspruch 9, wobei das verkapselte Pestizid Pyraclostrobin umfasst und das nichtverkapselte zusätzliche Pestizid Epoxyconazol, Metconazol, Boscalid oder ein 1-Methylpyrazol-4-ylcarboxanilid der Formel I 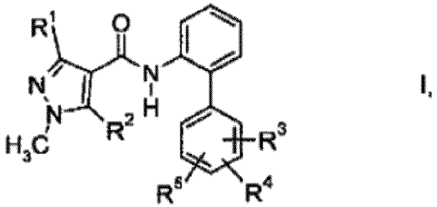 in der die Substituenten wie unten definiert sind:
R₁ ist C₁-C₄-Alkyl oder C₁-C₄-Halogenalkyl;
R² ist Wasserstoff;
R³, R⁴ und R⁵ sind unabhängig voneinander Cyano, Nitro, Halogen, C₁-C₄-Alkyl, C₁-C₄-Halogenalkyl, C₁-C₄-Alkoxy, C₁-C₄-Halogenalkoxy oder C₁-C₄-Alkylthio
umfasst.

11. Zusammensetzung nach Anspruch 9, wobei das verkapselte Pestizid ein 1-Methylpyrazol-4-ylcarboxanilid der Formel I nach Anspruch 10 umfasst und das nichtverkapselte zusätzliche Pestizid Epoxiconazol oder Metconazol umfasst.

12. Verfahren zur pestiziden Behandlung von Kulturen mit einer Endwuchshöhe von mindestens 140 cm, das die Behandlung mit der Zusammensetzung nach einem der Ansprüche 1 bis 11 umfasst; wobei
(i) die Kultur höher als 30 cm ist; und
(ii) das Verkapselungsmaterial des verkapselten Pestizids mehrfunktionelles Isocyanat und ein α,ω-Diamin der Formel H₂N-(CH₂)ₙ-NH₂, worin n eine ganze Zahl von 2 bis 6 bedeutet, in polymerisierter Form umfasst; und
(iii)im Kern der Kapseln mindestens 80% des Pestizids in einem organischen Lösungsmittel bei 25°C gelöst ist.

13. Verfahren nach Anspruch 12, wobei die Behandlung durch Bodenapplikation erfolgt.

14. Verfahren nach Anspruch 12 oder 13, wobei es sich bei der Kultur um Mais, Sonnenblume, Raps, Zuckerrohr, Sorghum oder Miscanthus handelt.

15. Verfahren nach Anspruch 14, wobei es sich bei der Kultur um Mais, der in seinem BBCH-Wachstumsstadium 10 bis 51 behandelt wird; Sonnenblume, die in ihrem BBCH-Wachstumsstadium 10 bis BBCH 69 behandelt wird; Raps, der in seinem BBCH-Wachstumsstadium 10 bis 69 behandelt wird; Sorghum, das in seinem BBCH-Wachstumsstadium 10 bis 51 behandelt wird, oder Zuckerrohr, das in seinem BBCH-Wachstumsstadium 11 bis 49 behandelt wird, handelt.

## Revendications

1. Composition comprenant un pesticide encapsulé, dans laquelle
(i) le matériau d'encapsulation du pesticide encapsulé comprend un isocyanate polyfonctionnel et une α-ω-diamine de formule H₂N-(CH₂)ₙ-NH₂, où n est un nombre entier allant de 2 à 6 sous forme polymérisée ; et
(ii) dans le coeur des capsules, au moins 80% du pesticide est solubilisé dans un solvant organique à 25°C ; et
où la composition comprend de 50 à 150 g/l de polyisocyanate et de 1 à 10 g/l d'α-ω-diamine.

2. Composition selon la revendication 1, dans laquelle la taille de particules moyenne des capsules va de 0,5 à 8 µm.

3. Composition selon la revendication 1, dans laquelle la taille de particules moyenne des capsules va de 1 à 3 µm.

4. Composition selon l'une quelconque des revendications 1 à 3, comprenant de 10 à 450 g/l de pesticide encapsulé, de 50 à 450 g/l de solvant organique, de 1 à 100 g/l d'agent tensioactif (agent tensioactif non ionique et/ou anionique) ; et de l'eau pour compléter à 1,0 1.

5. Composition selon l'une quelconque des revendications 1 à 4, dans laquelle le pesticide est un fongicide.

6. Composition selon la revendication 5, dans laquelle le pesticide est un fongicide à base de strobilurine.

7. Composition selon la revendication 5, dans laquelle le fongicide est la pyraclostrobine.

8. Composition selon la revendication 5, dans laquelle le fongicide est un 1-méthylpyrazol-4-ylcarboxanilide de formule I 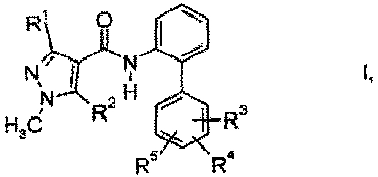 où les substituants sont tels que définis ci-après :
R¹ est C₁-C₄-alkyle ou C₁-C₄-halogénoalkyle ;
R² est hydrogène ;
R³, R⁴ et R⁵ sont indépendamment l'un de l'autre cyano, nitro, halogène, C₁-C₄-alkyle, C₁-C₄-halogénoalkyle, C₁-C₄-alcoxy, C₁-C₄-halogénoalcoxy ou C₁-C₄-alkylthio.

9. Composition selon l'une quelconque des revendications 1 à 6, comprenant en outre un pesticide supplémentaire non encapsulé, dans laquelle le pesticide encapsulé comprend une strobilurine ou un carboxamide, et le pesticide supplémentaire non encapsulé comprend un triazole ou un carboxamide.

10. Composition selon la revendication 9, dans laquelle le pesticide encapsulé comprend de la pyraclostrobine, et le pesticide supplémentaire non encapsulé comprend de l'époxiconazole, du metconazole, du boscalide ou un 1-méthylpyrazol-4-ylcarboxanilide de formule I 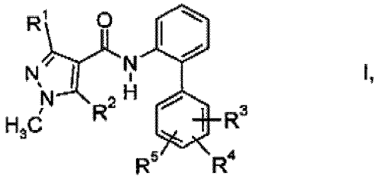 où les substituants sont tels que définis ci-après :
R¹ est C₁-C₄-alkyle ou C₁-C₄-halogénoalkyle ;
R² est hydrogène ;
R³, R⁴ et R⁵ sont indépendamment l'un de l'autre cyano, nitro, halogène, C₁-C₄-alkyle, C₁-C₄-halogénoalkyle, C₁-C₄-alcoxy, C₁-C₄-halogénoalcoxy ou C₁-C₄-alkylthio .

11. Composition selon la revendication 9, dans laquelle le pesticide encapsulé comprend un 1-méthylpyrazol-4-ylcarboxanilide de formule I selon la revendication 10, et le pesticide supplémentaire non encapsulé comprend de l'époxiconazole ou du metconazole.

12. Méthode de traitement pesticide de cultures ayant une hauteur de croissance finale d'au moins 140 cm, comprenant le traitement par une composition selon l'une quelconque des revendications 1 à 11, dans laquelle
(i) la culture est plus haute que 30 cm ; et
(ii) le matériau d'encapsulation du pesticide encapsulé comprend un isocyanate polyfonctionnel et une α-ω-diamine de formule H₂N-(CH₂)ₙ-NH₂, où n est un nombre entier allant de 2 à 6 sous forme polymérisée ; et
(iii) dans le coeur des capsules, au moins 80% du pesticide est solubilisé dans un solvant organique à 25°C.

13. Méthode selon la revendication 12, dans laquelle le traitement est effectué par application au sol.

14. Méthode selon la revendication 12 ou 13, dans laquelle la culture est le maïs, le tournesol, le colza, la canne à sucre, le sorgho ou le miscanthus.

15. Méthode selon la revendication 14, dans laquelle la culture est le maïs, qui est traité à un stade de croissance BBCH 10 à 51 ; le tournesol, qui est traité à un stade de croissance BBCH 10 à BBCH 69 ; le colza, qui est traité à un stade de croissance BBCH 10 à 69 ; le sorgho, qui est traité à un stade de croissance BBCH 10 à 51 ; ou la canne à sucre, qui est traitée à un stade de croissance BBCH 11 à 49.
